# EUROPEAN PATENT SPECIFICATION

(11) **EP 2 919 299 B1**
(45) Date of publication and mention of the grant of the patent: **11.10.2017**
(21) Application number: 14159484.6
(22) Date of filing: 13.03.2014
(51) Int. Cl.: H01M 12/06, H01M 4/86, H01M 4/88, H01M 4/96, H01M 12/08

(54) **IMPROVED LITHIUM/AIR CATHODE DESIGN**
VERBESSERTES LITHIUM-/LUFTKATHODENDESIGN
CONCEPTION DE CATHODE À AIR/LITHIUM AMÉLIORÉE

(43) Date of publication of application: 16.09.2015
(73) Proprietor: ROBERT BOSCH GMBH, 70442 Stuttgart (DE); FM LAB, Moscow 124498 (RU)
(72) Inventor: Wöhrle, Thomas, 80807 München (DE); Eberle, Felix, 89075 Ulm (DE); Itkis, Daniil, 141980 Dubna (RU); Semenenko, Dmitry, 353236 Afipsky, Krasnodar region (RU)
(74) Representative: Hörschler, Wolfram Johannes

(56) References cited:
- WO-A1-2013/071292
- DE-A1- 10 347 570
- US-A- 6 060 186
- US-A1- 2005 158 626
- US-A1- 2010 227 220

## Description

### Technical Field

The present invention is related to an electrode of an electrode assembly for a Lithium/Air battery cell.

### Discussion of Prior Art

US 5,510,209 is related to a solid polymer electrolyte-based oxygen battery. A polymer-based battery comprises metal anodes in an oxygen gas cathode. The oxygen is not stored in the battery but rather it accessed from the environment. The solid-state battery is constructed by sandwiching a metal ion-conductive polymer electrolyte film between a metal anode (negative electrode) and a composite carbon electrode which serves as the cathode current collector, on which the electro-active oxygen is reduced during discharge of the battery to generate electric current. The metal anodes include lithium, magnesium, sodium, calcium, aluminum and zinc.

EP 1 262 048 B1 is related to an electrode/separator laminate for galvanic cells and a process for its manufacture. According to the method disclosed in EP 1 261 048 B1 a method is provided for producing an electrode/separator laminate for electrochemical elements which contains at least one lithium-intercalating electrode, which is composed of a PVdF-HFP copolymer, where in the polymer matrix electrochemically active material, which are insoluble in the polymer, are finely dispersed. The PVdF-HFP copolymer is dissolved in a solvent and is mixed with electrochemically active materials. The pasty substance obtained in this way is extruded to form a sheet and is then laminated with the polyolefine separator which is coated with the PVdF-HFP copolymer. In each case a PVdF-HFP copolymer is used, having a proportion of HFP > 8 % by weight. It appears to be very likely that in future battery systems, such as consumer or stationary applications, systems will be developed which are not based on intercalation like the established Lithium/Ion technology. A promising battery technology, which is in development, is the Lithium/Air or Lithium/Oxygen system which makes use of a conversion process instead of an intercalation process. Lithium/Air battery cells contain a metallic lithium anode and an oxygen electrode and can therefore realize a high specific energy cell level. A system with a metallic lithium anode and an oxygen electrode is described in the afore-mentioned US 5,510,209.

In 2012 a review on common challenges for Lithium/Air technology was published by Jake Christensen et al. in Journal of the Electrochemical Society, 159 (2) R1-R30 (2012).

Document WO 2013/071292 A2 discloses a battery cell containing an electrode, in particular a cathode, provided with a layer of disperse graphite and carbon black, further containing PVDF resin binder.

The state of the art in electrode processing are electrode binders such as polyvinylidene difluoride (PVdF) or polyvinylidene difluoride-co-hexafluoropropylene (PVdF-HFP). Such polymer binders provide good adhesion between microscopic particles; however, they establish electrical insulators. This in turn means that the composite electrode with PVdF shows a decreased loading capacity. Polymer electrode binder such as PVdF-HFP are well described in literature as briefly discussed in EP 1 261 048 B1.

Electrode binders such as PVdF establish electrical insulators and even a few mass-% in the electrode composite decreases the loading capacity considerably. If in battery cell designing using electrode insulator is disclaimed, one can only achieve very low loading such as 100 nm -1000 nm. With such low loadings of active material, battery cells cannot be commercialized because of the disadvantageous ratio between active and passive materials, not to name but a few, such as collector foil electrolyte and separator. For Lithium/Air technology, the level of carbon loading on the cathode (oxygen electrode) is limited to ca. 1000 nm. Above this thickness, the carbon films become unstable and show poor adhesion between the carbon particles and between carbon electrode and metallic collector foil,

### Summary of the invention

An object of this present invention is to increase the loading capacity of an electrode of an electrode assembly for a Lithium/Air battery cell.

A still further object of the present invention is to increase the ratio between active and passive materials of a battery cell, particularly a Lithium/Air battery cell. The invention is defined by the appended claims. According to the present invention an electrode of an electrode assembly of a Lithium/Air battery cell, is provided, wherein said electrode is provided with a layer of disperse graphite and carbon black.

Surprisingly, an electrode composite of disperse graphite and carbon black allows to apply a higher loading capacity of this mixture as compared to pure carbon black material. The loading capacity of the disperse graphite/carbon black blend allows to form films or layers up to a thickness of about 10,000 nm (≙ 10 µm) without using an electrode binder. The fact that the disperse graphite does not constitute an electrical insulator results in a higher loading capacity in [mAh/g] for the battery cell and thus results in an increased battery cell power behavior. Still further, the ratio between active and passive materials has been shifted according to the present invention to realize a high energy Lithium/Air battery cell. According to the present invention, said electrode is a cathode of said electrode assembly (oxygen electrode).

Said layer of said electrode according to the present invention has a thickness between 1000 nm (1 µm) up to 10,000 nm (10 µm), which exceeds current thicknesses of film layers applied, which are in the range between 100 nm and 1000 nm, which results in a very low loading capacity. With such low loadings on active materials, battery cells cannot be commercialized since the ratio between active material and passive material such as collector foil, electrolyte or separator is too disadvantageous. Furthermore, said layer of said electrode is free of a binder.

In one embodiment of the present invention, said electrode is provided with a layer comprising 90 wt.-% carbon black, e.g. Super P or Super C, Timcal, Belgium, and 10 wt.-% disperse graphite, e.g. MCMB (6-28), GFG5, reduced graphene oxide or Timcal KS6L. In a further very advantageous embodiment of the present invention, said layer contains 80 wt.-% carbon black, e.g. Super P or Super C, Timcal, Belgium, and 20 wt.-% disperse graphite, e.g. MCMB (6-28), GFG5, reduced graphene oxide or Timcal KS6L.

The present invention is related to a method for producing an electrode. In a first method step, a suspension is produced containing carbon black and disperse graphite. In a second method step, said suspension is sprayed by means of an airbrush on a coating grid. In a resulting method step, a stable layer is obtained having a thickness up to 10,000 nm (≙ 10 µm).

By means of said method, a suspension can be produced which contains 90 wt.-% carbon black and 10 wt.-% disperse graphite. In an alternative, a suspension can be produced containing 80 wt.-% carbon black and 20 wt.-% disperse graphite.

According to the method provided by the present invention, said suspension is sprayed on a coating grid, for instance a nickel mesh.

Said electrode according to the present invention is used in an electrode assembly of a Lithium/Air battery cell of a battery module in a Hybrid Electrical Vehicle (HEV), a Plug-in Hybrid Electric Vehicle (PHEV) or an Electric Vehicle (EV).

### Advantages of the present invention

By means of the present invention in Lithium/Air battery technology, the level of carbon-loading on the electrode assembly, particularly on the cathode (oxygen electrode) is increased since the thickness of the electrochemical component, the layer of disperse graphite and carbon black, exceeds the thickness of the layer according to prior art solutions by the factor 10. By means of the present invention, the disadvantage, according to which a carbon film of pure carbon becoming unstable, further showing poor adhesion between the carbon electrode and a metallic collector foil is eliminated. The thickness of the electrochemical component according to the present invention is between 1000 nm (1 µm) and 10,000 nm (10 µm). Due to this thickness range of the electrochemical component according to the present invention, no binding agent, particularly no electrode binder such as polyvinylidene difluoride (PVdF) or polyvinylidene difluoride-co-hexafluoropropylene (PVdF-HFP), is necessary in this range of thickness. Thus, in a thickness range of the electrochemical component according to the present invention between 1000 nm (1 µm) and 10,000 nm (10 µm) no binder is present, which otherwise may have electrical insulation properties, i.e. due to the absence of the polymer binders the composite electrodes according to the present invention show an increased loading capacity. The fact that the blend, according to the present invention, of disperse graphite and carbon black and the fact that the graphite in this blend is not an electrical insulator leads to a higher loading capacity in mAh for the battery cell and an increased cell power. According to the present invention, the ratio between active and passive materials is shifted to realize a high energy Lithium/Air battery cell.

According to other embodiments which do not fall under the scope of the present invention, higher thicknesses of the electrochemical component can be reached as well. In case the thickness of the electrochemical component exceeds 10,000 nm (10 µm), an electrode binding agent such as polyvinylidene difluoride (PVdF) or polyvinylidene difluoride-co-hexafluoropropylene (PVdF-HFP) is used. Due to the binding material, higher thicknesses of the electrochemical component can be obtained. Even though an electrode binder such as polyvinylidene difluoride (PVdF) is present according to other embodiments not falling under the scope of the present invention the blend of disperse graphite and carbon black shows advantages. Due to the low specific surface of the disperse graphite compared to carbon black, less electrode binding agent is required for obtaining a similar electrode adhesion behavior. Therefore, a disperse graphite/carbon black electrode can be prepared using a lower amount of electrode binding agent, having insulating properties. When compared with electrode assemblies according to the prior art, using the present invention a higher specific energy Lithium/Air battery cell can be obtained.

According to the present invention and given the higher thickness of the electrochemical component, i.e. the thickness of the layer between 1000 nm (1 µm) and 10,000 nm (10 µm), the ratio between active material and passive materials, such as collector foil, electrolyte and separator, used in a battery cell is shifted advantageously to the active material, allowing a commercialization of the Lithium/Air battery cell system.

The electrochemical component according to the present invention is produced by airbrush coating. Airbrush coating allows for an easy manufacturing and is a reliable process for industrial application.

### Brief description of the drawings

The present invention will be described further using the drawings, in which
- Figure 1: shows various constant current discharge voltage profiles of different sample materials for the electrochemical component according to the present invention and
- Figure 2: shows a schematic view of a method to produce the electrochemical component by airbrush.

### Preferred embodiments

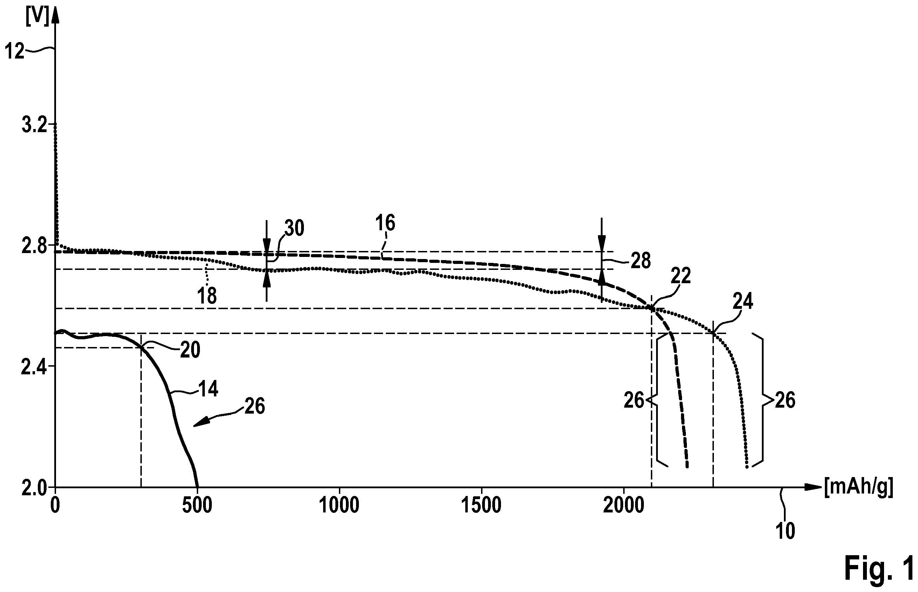

Figure 1 shows a number of constant current discharge voltage profiles of samples of composite material according to the present invention.

In Figure 1 a loading capacity 10 of a Lithium/Air battery cell is given in [mAh/g]. On the y-axis a cell voltage 12 in [V] is given. Only the range of interest, i.e. the voltage, is depicted, i.e. the voltage range in which a Lithium/Air battery system is operated. This voltage range is between 2.0 and 3.2 V, given one Lithium/Air battery cell alone, the practical operating range of a Lithium/Air battery cell is between 3.0 V and 2.4 V, particularly at 2.8 V.

Said Lithium/Air battery cells are used for battery modules, which in turn are assembled in battery packs for secondary batteries, i.e. said high voltage batteries as a power source for the electrical drives of a Hybrid Electrical Vehicle (HEV), a Plug-in Hybrid Electric Vehicle (PHEV) or an Electric Vehicle (EV).

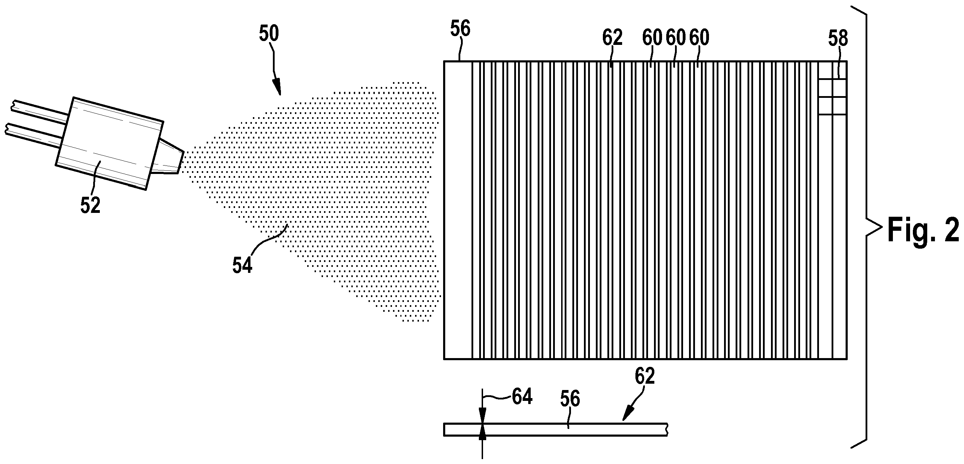

In figure 1, a first constant current discharge voltage profile 14 is shown. This first constant current discharge voltage profile 14 is taken for a material for the electrochemical component according to the present invention, i.e. said suspension film or suspension layer 62 obtained of Super P or Super C, Timcal, Belgium, as a black carbon-material in acetone. A suspension 54 of Super P or Super C, Timcal, Belgium, in acetone was sprayed by airbrush coating 50 (as schematically shown in figure 2) onto a nickel mesh such as a coating grid 56, as shown in figure 2. A stable film was obtained having a film thickness 64 of only 1000 nm (1 µm). In the first constant current discharge voltage profile 14 shown in figure 1, this first material shows a medium performance since a loading capacity of only 500 mAh/g was obtained. With respect to the first constant current discharge voltage profile 14 shown in figure 1, a turning point 20 of said first voltage profile 14 is characterized by a voltage of 2.5 V and 300 mAh/g. After said first turning point 20, a sharp loading capacity decrease 26 is observed. The electrochemical component made by the first material, i.e. a suspension 54 of Super P or Super C, Timcal, Belgium, in acetone, only could be produced having a film thickness 64 until 1000 nm (1 µm) which constitutes a lower limit for the layer 62 made of the suspension 54. Given the properties according to the first constant current discharge voltage profile 14 shown in figure 1, the corresponding material has medium properties in terms of loading capacity 10.

A second constant current discharge voltage profile 16 was obtained for a second material for the electrode composite, i.e. the electrochemical component according to the present invention being a suspension 54 of 90 wt.-% Super P (Timcal Belgium) and 10 wt.-% MCMB (6-28), GFG5, KS6L or reduced graphene oxide. The second constant current discharge voltage profile 16 is characterized by an enhanced loading capacity 10 of about 2000 mAh/g. A turning point 22 of said second constant current discharge voltage profile 16 being characterized by a voltage of about 2.6 V and a loading capacity of 2100 mAh/g. As can be derived from figure 1, this sample of the suspension 54 has an excellent loading capacity performance, the cell voltage obtained is characterized by a gradual decrease 28 in terms of cell voltage is observed for the second material only when operated. A significant drop of voltage according to the sharp loading capacity decrease, characterized by reference numeral 26, is observed after the second turning point 22 of said second constant current discharge voltage profile 16 according to figure 1.

Figure 1 further shows a third constant current discharge voltage profile 18. The third constant current discharge voltage profile 18 has been taken for a third material for the electrochemical component being a suspension 54 of 80 wt.-% Super P or Super C, Timcal, Belgium, and 20 wt.-% MCMB (6-28), GFG5, KS6L or reduced graphene oxide. This third material, i.e. obtained from a suspension 54 of disperse graphite and carbon black, is similar to the suspension 54 of the afore-mentioned second material, the properties of which are shown in the second constant current discharge voltage profile 16 having similar electrical properties. From this third material stable films were obtained, having a thickness 64 of 10,000 nm (10 µm). For the third constant current discharge voltage profile 18 according to figure 1, it was observed that a third turning point 24 of said third voltage profile 18 is characterized by a cell voltage of about 2.6 V and a loading capacity 10 of about 2100 mAh/g. At higher loading capacities 10 in a range of about 1500 mAh/g and higher, a gradual decrease 30 in terms of cell voltage is observed for the third material.

Comparing said constant current discharge voltage profiles 14, 16, 18 according to figure 1, the suspension 54 for the second material, for the second voltage profile 16 and the third voltage profile 18 show the best results in terms of operating voltage range and loading capacity 10 [mAh/g]. The second and the third composite material are blends of disperse graphite and carbon black in the ratio of 10 wt.-% to 90 wt.-% for the second material and are an example for a blend of carbon black and disperse graphite in the ratio of 80 wt.-% to 20 wt.-%. In general, Super P, Timcal, Belgium is chosen for the carbon black material, whereas MCMB (6-28), GFG5 or reduced graphene oxide, KS6L are selected for the disperse graphite material.

Figure 2 schematically shows an airbrush coating for producing the electrochemical components according to the present invention.

From figure 2 it can be derived that a said first, second and third materials, the constant current discharge voltage profiles 14, 16, 18 of which have been shown in figure 1, are obtained by airbrush coating 50. In airbrush coating 50 an airbrush 52 is used for spraying a suspension 54 onto a coating grid 56. Said coating grid 56 particularly is a nickel mesh, i.e. expanded nickel metal. Said coating grid 56, schematically given in figure 2 has a grid structure 58. Besides said grid structure 58, a line pattern 60 may be present on the coating grid 56 as well. From said coating grid 56 layers 62 of films of the electrochemical component according to the first, second or third material are obtained after drying of the suspension 54 on said coating grid 56. The film thickness 64 of the suspension film or layer 62 of the electrochemical component is between 1000 nm (1 µm), i.e. a suspension 54 of Super P or Super C, Timcal, Belgium, in acetone. The film thickness 64 of the electrochemical component according to example 2, i.e. an electrochemical component of a suspension 54 of 90 wt.-% Super P and 10 wt.-% disperse graphite, e.g. MCMB, GFG5, KS6L or reduced graphene oxide resulted in films or layers 62 - after drying of said suspension 54 - having a film thickness 64 up to 10,000 nm (10 µm) and finally, example 3 resulted in a film thickness 64 of a corresponding electrochemical component, i.e. a film thickness 64 of 10,000 nm (10 µm) for a suspension 54 of 80 wt.-% carbon black material, such as Super P, Timcal, Belgium, and 20 wt.-% disperse graphite, e.g. MCMB (6-28), GFG5, reduced graphene oxide or KS6L after drying of the suspension 54.

For higher film thicknesses 64 of the electrochemical component according to other embodiments not falling under the scope of the present invention, an electrode binder such as polyvinylidene difluoride (PVdF), e.g. Kynar 2801, Arkema, France, is added to the respective suspensions 54. In this case, a suspension 54 of disperse graphite, carbon black and the electrode binder is used. For higher film thicknesses 64, i.e. exceeding 10,000 nm (10 µm) and even more, the addition of electrode binder still has advantages. Due to the low specific surface of disperse graphite as compared to carbon black, a mixture of these materials requires less electrode binding agent for obtaining a similar electrode adhesion. Therefore, a disperse graphite/carbon black mixture for use as an electrochemical component on an electrode of an electrode assembly can be prepared with less insulating electrode binder, i.e. less polyvinylidene difluoride (PVdF) or polyvinylidene difluoride-co-hexafluoropropylene (PVdF-HFP), thus further decreasing electrical insulating properties. That means that a higher specific energy of the Lithium/Air-battery cell is obtained.

When using the present invention, a state of the art electrode processing is optimized. Due to the fact that a higher film thickness 64 of the electrochemical component, i.e. said layer 62 to be applied to one of the electrodes of said electrode assembly, is obtained by an industrial process as airbrush coating 50, as shown in figure 2 schematically, the loading capacity in [mAh/g] of the Lithium/Air battery cell system is enhanced significantly when compared to prior art solutions. Even higher film thicknesses 64 of the electrochemical component, i.e. said layer 62, obtained of the suspensions 54 are feasible. The blend of dispersed graphite with carbon black has excellent adhesion properties to the electrode material, not requiring a polymer binding agent in the thickness range between 1000 nm (1 µm) and 10,000 nm (10 µm). For higher film thicknesses 64, however, according to other non-inventive embodiments a binder such as polyvinylidene difluoride (PVdF), e.g. Kynar 2801, Arkema, France, may be added to the suspension 54, which requires an even higher loading capacity of the electrochemical component, i.e. said film or layer 62 obtained from the dried suspension 54. In the thickness range exceeding 10,000 nm (10 µm), the binding agent does not even affect the loading capacity due to its insulating property due to the low specific surface of graphite as compared to carbon black in the blend.

## Claims

1. Electrode of an electrode assembly of a Lithium/Air battery cell, wherein said electrode is provided with a layer (62) of disperse graphite and carbon black.
wherein a thickness (64) of said layer (62) is between 1µm and 10 µm, **characterized in that** said layer (62) is free of a binder.

2. Electrode according to claim 1, wherein said electrode is a cathode of said electrode assembly.

3. Electrode according to one of the preceding claims, wherein said layer (62) comprises 90 wt.-% carbon black and 10 wt.-% disperse graphite.

4. Electrode according to one of claims 1 to 2, wherein said layer (62) comprises 80 wt.-% carbon black and 20 wt.-% disperse graphite.

5. Method for producing an electrode according to one of claims 1-4, with the following method steps:
a) Producing a suspension (54) of carbon black and disperse graphite,
b) spraying said suspension (54) produced according to method step a) by airbrush coating (50) on a coating grid (56),
c) obtaining a material layer (62) of a thickness (64) of between 1 µm and 10 µm.

6. Method according to claim 5, wherein said suspension (54) contains 90 wt.-% carbon black and 10 wt.-% disperse graphite.

7. Method according to claim 5, wherein said suspension (54) contains 80 wt.-% carbon black and 20 wt.-% disperse graphite.

8. Method according to claim 5, wherein according to method step b) said suspension (54) is sprayed onto a nickel mesh.

9. Use of an electrode according to one of claims 1-4 in an electrode assembly of a Lithium/Air battery cell of a battery module in a Hybrid Electrical Vehicle (HEV), a Plug-in Hybrid Electric Vehicle (PHEV) or in an Electric Vehicle (EV).

## Patentansprüche

1. Elektrode einer Elektrodeneinheit von einer Lithium/Luft-Batteriezelle, wobei die besagte Elektrode mit einer Schicht (62) aus dispersem Graphit und Ruß ausgestattet ist,
wobei eine Dicke (64) der besagten Schicht (62) zwischen 1 µm und
10 µm liegt, **dadurch gekennzeichnet, dass**
die besagte Schicht (62) frei von einem Bindemittel ist.

2. Elektrode nach Anspruch 1, wobei die besagte Elektrode eine Kathode der besagten Elektrodeneinheit ist.

3. Elektrode nach einem der vorstehenden Ansprüche, wobei die besagte Schicht (62) 90 Gew.% Ruß und 10 Gew.% dispersen Graphit enthält.

4. Elektrode nach einem der Ansprüche 1 bis 2, wobei die besagte Schicht (62) 80 Gew.% Ruß und 20 Gew.% dispersen Graphit enthält.

5. Verfahren zur Herstellung einer Elektrode nach einem der Ansprüche 1 bis 4, mit den folgenden Verfahrensschritten:
a) Herstellung einer Suspension (54) aus Ruß und dispersem Graphit,
b) Sprühen der besagten Suspension (54), die nach dem Verfahrensschritt a) hergestellt ist, mittels einer Airbrush-Beschichtung (50) auf ein Beschichtungsgitter (56),
c) Erhalten einer Materialschicht (62) mit einer Dicke (64) zwischen 1 µm und 10 µm.

6. Verfahren nach Anspruch 5, wobei die besagte Suspension (54) 90 Gew.% Ruß und 10 Gew.% dispersen Graphit enthält.

7. Verfahren nach Anspruch 5, wobei die besagte Suspension (54) 80 Gew.% Ruß und 20 Gew.% dispersen Graphit enthält.

8. Verfahren nach Anspruch 5, wobei nach dem Verfahrensschritt b) die besagte Suspension (54) auf ein Nickel-Netz gesprüht wird.

9. Verwendung einer Elektrode nach einem der Ansprüche 1 bis 4 in einer Elektrodeneinheit von einer Lithium/Luft-Batteriezelle von einem Batteriemodul in einem Hybrid-Elektrofahrzeug (HEV), in einem Plug-In-Hybridfahrzeug (PHEV) oder in einem Elektrofahrzeug (EV).

## Revendications

1. Électrode d'un ensemble d'électrodes d'une cellule de batterie lithium/air, ladite électrode étant dotée d'une couche (62) de graphite dispersé et de noir de carbone,
dans laquelle une épaisseur (64) de ladite couche (62) est située entre 1 µm et 10 µm,
**caractérisée en ce que** ladite couche (62) ne contient pas de liant.

2. Électrode selon la revendication 1, ladite électrode étant une cathode dudit ensemble d'électrodes.

3. Électrode selon l'une des revendications précédentes, dans laquelle ladite couche (62) comprend 90 % en poids de noir de carbone et 10 % en poids de graphite dispersé.

4. Électrode selon l'une des revendications 1 et 2, dans laquelle ladite couche (62) comprend 80 % en poids de noir de carbone et 20 % en poids de graphite dispersé.

5. Procédé pour produire une électrode selon l'une des revendications 1 à 4, comprenant les étapes suivantes consistant à :
a) produire une suspension (54) de noir de carbone et de graphite dispersé,
b) pulvériser ladite suspension (54) produite selon l'étape de procédé a) par revêtement au pistolet (50) sur une grille de revêtement (56),
c) obtenir une couche de matériau (62) d'une épaisseur (64) située entre 1 µm et 10 µm.

6. Procédé selon la revendication 5, dans lequel ladite suspension (54) contient 90 % en poids de noir de carbone et 10 % en poids de graphite dispersé.

7. Procédé selon la revendication 5, dans lequel ladite suspension (54) contient 80 % en poids de noir de carbone et 20 % en poids de graphite dispersé.

8. Procédé selon la revendication 5, dans lequel, selon l'étape de procédé b), ladite suspension (54) est pulvérisée sur une maille de nickel.

9. Utilisation d'une électrode selon l'une des revendications 1 à 4 dans un ensemble d'électrodes d'une cellule de batterie lithium/air d'un module de batterie d'un véhicule électrique hybride (HEV), d'un véhicule électrique hybride rechargeable (PHEV) ou d'un véhicule électrique (EV),
